(19) Europäisches Patentamt
European Patent Office
Office européen des brevets

(11) EP 2 840 390 A1

(12) **EUROPÄISCHE PATENTANMELDUNG**

(43) Veröffentlichungstag:
**25.02.2015 Patentblatt 2015/09**

(21) Anmeldenummer: **13180899.0**

(22) Anmeldetag: **19.08.2013**

(51) Int Cl.:
*G01N 27/44* (2006.01)          *G01N 31/16* (2006.01)
*G01N 27/42* (2006.01)

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(71) Anmelder: **Mettler-Toledo AG**
**8606 Greifensee (CH)**

(72) Erfinder:
• **Blank, Thomas**
  **8603 Schwerzenbach (CH)**
• **Pfuhl, Günter**
  **8603 Schwerzenbach (CH)**
• **Bécheiraz, Félix**
  **8081 Bülach (CH)**

(54) **Coulometrische Titrationszelle**

(57)     Coulometrische Titrationszelle mit einer ersten elektrochemische Halbzelle mit einer ersten Elektrode (205, 801, 7, 407, 507, 607, 907); einem zweiten Gehäuse (1, 401, 501, 601, 801, 901), welches eine zweite elektrochemische Halbzelle mit einer zweiten Elektrode (3, 403, 503, 603, 803, 903) und einem Elektrolyten (2, 302, 402, 502, 602, 802, 902), in den die zweite Elektrode (3, 403, 503, 603, 803, 903) eintaucht, umfasst; einem Redoxsystem mit mindestens einem ersten und zweiten Redoxpartner; mindestens einem Diaphragma (4, 604, 804), welches zwischen der ersten und zweite elektrochemischen Halbzelle angeordnet ist; und einem Stromkreis (11, 411, 511), in welchen die erste und zweite elektrochemische Halbzelle eingebunden sind; dadurch gekennzeichnet, dass das zweite Gehäuse (1, 401, 501, 601, 801, 901) geschlossen ist, so dass ein Ladungs- und Stoffaustausch nur über das Diaphragma (4, 604, 804) möglich ist; und dass der Elektrolyt (2, 302, 402, 502, 602, 802, 902) fest oder verfestigt ist und einen ersten Redoxpartner enthält.

**Fig. 1**

EP 2 840 390 A1

**Beschreibung**

Die Erfindung betrifft eine coulometrische Titrationszelle zur Durchführung coulometrischer Titrationen.

Die volumetrische Titration ist in vielen industriellen Laboratorien eine der Routinemethoden zur quantitativen Bestimmung der Stoffmenge einer Substanz oder eines Analyten in einer fluiden Probe. Traditionell wird dafür ein Titriermittel aus einer Bürette einer Probe zugegeben, die gerührt wird, und die Veränderung beispielsweise des pH Werts oder der Leitfähigkeit der Probe mit entsprechenden Sensoren verfolgt. Anhand des bis zum Endpunkt oder Äquivalenzpunkt der Titration verbrauchten Titriermittelvolumens und des Titers des Titriermittels kann dann anhand der Stöchiometrie der ablaufenden Reaktion die unbekannte Konzentration oder die Stoffmenge des Analyten in der Probe berechnet werden. Als "Titer" wird der Quotient aus der tatsächlich vorliegenden Konzentration einer Titrier- oder Masslösung und der angestrebten Konzentration derselben Lösung bezeichnet. Der Titer ist somit ein Faktor zur Kennzeichnung von Normallösungen.

Heutzutage werden anstelle von manuell zu bedienenden Büretten häufig Titrierautomaten eingesetzt, welche auch als Titratoren bezeichnet werden. Titratoren umfassen mindestens ein automatisches Dosierelement, mit welchem das Titriermittel in vorgegebenen Inkrementen oder dynamisch einer Probe zugegeben wird, mindestens einen geeigneten Sensor, eine Steuereinheit und eine Anzeigeeinheit. Das Titriermittel ist auch bei einem Titrator in der Regel flüssig und es ist notwendig, dass der Titer des Titriermittels regelmässig überprüft und/oder das Titriermittel neu zubereitet wird, um eine Veränderung auf Grund einer Alterung und/oder von Verunreinigungen zu verhindern, da diese zu Messfehlern führt.

Neben der volumetrischen Titration ist auch die coulometrische Titration oder Coulometrie zur quantitativen Ermittlung der Stoffmenge oder Konzentration einer oxidierbaren oder reduzierbaren Verbindung bekannt. Eine coulometrische Titrationszelle umfasst zwei elektrochemische Halbzellen, wobei eine elektrochemische Halbzelle eine Arbeitselektrode und die andere elektrochemische Halbzelle eine in einem Elektrolyten angeordnete Gegenelektrode umfasst. Bei der Coulometrie wird das Titriermittel während der Titration elektrochemisch an der Arbeitselektrode erzeugt und die elektrische Ladung, die an der Arbeitselektrode umgesetzt wird, ermittelt. An der Gegenelektrode läuft der umgekehrte elektrochemische Vorgang ab, wobei der Elektrolyt innerhalb der elektrochemischen Halbzelle der Gegenelektrode während der Titration aufgrund der Reduktion oder Oxidation der enthaltenen Substanzen an der Gegenelektrode verbraucht wird. Die beiden elektrochemischen Halbzellen der coulometrischen Titrationszelle können mit einem Diaphragma voneinander getrennt sein, welches je nach Art und Polarität der Arbeitselektrode einen Ladungs- und/oder einen Stofftransport zwischen den beiden elektrochemischen Halbzellen ermöglicht, wobei der Transport durch das Diaphragma uni- oder bidirektional sein kann.

Je nach Ausgestaltung der coulometrischen Titrationszellen können beispielsweise Säure- oder Base-Titrationen durchgeführt werden und die Titrationszelle als Basen- oder Säuregenerator ausgestaltet sein, wobei ein Basengenerator Hydroxidionen ($OH^-$) zur Säuretitration und ein Säuregenerator Hydroxoniumionen ($H_3O^+$) für die Basentitration produziert.

WO 2009/076144 A1 offenbart beispielsweise eine coulometrische Titrationszelle mit einer Platin-Arbeitselektrode, einer Platin-Gegenelektroden und einer mehrschichtigen Ionen-Austausch-Membran als Diaphragma. Beim Einsatz eines geeigneten Elektrolyten und einer geeigneten Ionen-Austausch-Membran kann die Titrationszelle je nach Polarisierung der Elektroden entweder zur Säure-Titration oder zur BasenTitration verwendet werden kann. Für die Säure-Titration kann zum Beispiel eine wässrige Natriumhydroxid-Lösung ($NaOH$) zusammen mit einer Kationen-Austausch-Membran eingesetzt werden.

Weiterhin können für coulometrische Titrationen auch andere Substanzen *in situ* erzeugt werden, welche dann mit dem Analyten in der Probe reagieren. Enthält die Probe Iodid, so kann dieses an der Arbeitselektrode zu Iod reduziert werden und darüber beispielsweise Schwefeldioxid ($SO_2$) in der Probe bestimmt werden.

Die bekannten coulometrischen Titrationszellen haben jedoch den Nachteil, dass bei der Durchführung der Titration Gase an der Arbeits- und/oder Gegenelektrode entstehen, die aus der Titrationszelle abgeführt werden müssen, zudem sind sie auch auf Grund der häufig verwendeten Edelmetall-Elektroden teuer in der Produktion. Insbesondere die Bereitstellung kleiner und kompakter Titrationszellen ist daher bislang nicht möglich.

Die Aufgabe dieser Erfindung ist die Bereitstellung einer coulometrischen Titrationszelle, die klein und kompakt gestaltet ist und bei welcher während des Betriebs im Wesentlichen keine Gasentwicklung auftritt.

Gelöst wird diese Aufgabe durch eine coulometrische Titrationszelle mit einer ersten elektrochemischen Halbzelle mit einer ersten Elektrode, und mit einem zweiten Gehäuse, welches eine zweite elektrochemische Halbzelle mit einer zweiten Elektrode und einem Elektrolyten umfasst. Die zweite Elektrode taucht in den Elektrolyten ein. Weiterhin umfasst die Titrationszelle ein Redoxsystem mit einem ersten und zweiten Redoxpartner, ein Diaphragma, welches zwischen der ersten und zweiten elektrochemischen Halbzelle angeordnet ist, und einen Stromkreis, in welchen die erste und zweite elektrochemische Halbzelle eingebunden sind. Das zweite Gehäuse ist geschlossen, so dass ein Ladungs- und Stofftransport nur über das Diaphragma möglich ist. Weiterhin enthält der Elektrolyt, welcher fest oder verfestigt ist, den ersten Redoxpartner.

Die erfindungsgemässe Titrationszelle ist sehr vorteilhaft, da aufgrund des festen oder verfestigten Elektrolyten, welcher zudem den ersten Redoxpartner enthält, im Betrieb eine Gasentwicklung an der zweiten Elektrode, welche in den Elektrolyten eintaucht, im Wesentlichen verhindert werden kann. Dadurch wird es möglich das zweite Gehäuse, welches die zweite elektrochemische Halbzelle umgibt, besonders klein und kompakt auszugestalten.

Das Diaphragma trennt insbesondere die zweite elektrochemische Halbzelle von der ersten elektrochemischen Halbzelle sowie im Betrieb von der Probe oder dem Messmedium ab. Ein Ladungs- und/oder Stoffaustausch zwischen den beiden elektrochemischen Halbzellen oder zwischen der Probe und der zweiten elektrochemischen Halbzelle kann daher nur über das Diaphragma erfolgen.

In einer weiteren Ausführungsform ist das zweite Gehäuse austauschbar in einem ersten Gehäuse angeordnet, so dass die zweite elektrochemische Halbzelle zusammen mit dem zweiten Gehäuse einfach ausgewechselt werden kann, wenn der darin enthaltene Elektrolyt verbraucht ist. Das erste Gehäuse kann zudem die erste elektrochemische Halbzelle umfassen.

Vorzugsweise umfasst der Elektrolyt oder die zweite Elektrode den zweiten Redoxpartner. Beide Redoxpartner können somit im Elektrolyt vorliegen. In einer weiteren Ausgestaltung liegt der erste Redoxpartner im Elektrolyten vor und der zweite Redoxpartner ist in der zweiten Elektrode enthalten, was beispielsweise durch Einsatz einer Opferelektrode als zweite Elektrode realisiert werden kann.

Vorzugsweise umfasst die Titrationszelle ein reversibles Redoxsystem, so dass je nach Schaltung die erste Elektrode als Anode oder Kathode geschaltet und eingesetzt werden kann. Ein reversibles Redoxsystem ist derart ausgelegt, dass das chemische Gleichgewicht zwischen den beiden Redoxpartnern durch die Schaltung der ersten Elektrode als Anode oder Kathode in die eine oder andere Richtung verschoben wird. Mit einem reversiblen Redoxsystem sind, zumindest in einem gewissen Umfang, sowohl Säure- als auch Base-Titrationen mit derselben Titrationszelle möglich, ohne dass der Elektrolyt oder das Diaphragma ausgetauscht werden müssen.

Die Verschiebung des chemischen Gleichgewichts zwischen den beiden Redoxpartnern, ermöglicht eine zumindest teilweise Regeneration der Titrationszelle und/oder den flexiblen Einsatz derselben Titrationszelle als Säure- oder Basengenerator.

Die erste Elektrode und die zweite Elektrode sind, im Gegensatz zum bekannten Stand der Technik, vorzugsweise edelmetallfrei. Die erste Elektrode kann ein Metall, eine Metallverbindung oder Mischungen daraus, umfassen, wobei das Metall vorzugweise aus der Gruppe gewählt wird, welche Eisen, Chrom, Molybdän, Nickel und/oder Titan umfasst.

Die zweite Elektrode kann ebenfalls ein Metall, eine Metallverbindung oder Mischungen daraus umfassen, wobei das Metall vorzugweise aus der Gruppe gewählt wird, welche Eisen, Chrom, Molybdän, Titan, Nickel, Zink und/oder Zink umfasst. Eine Zinkhaltige zweite Elektrode kann beispielsweise als Opferelektrode eingesetzt werden.

In einer weiteren Ausgestaltung kann die erste und/oder zweite Elektrode ganz oder teilweise aus einem Glaskarbonwerkstoff oder einem elektrisch leitenden Polymer bestehen.

In einer weiteren Ausgestaltung kann das erste oder zweite Gehäuse ein elektrisch leitendes Polymer enthalten oder aus einem elektrisch leitenden Polymer bestehen, welches aufgrund seiner Eigenschaften in den Stromkreis der coulometrischen Titrationszelle eingebunden werden kann, so dass das erste oder zweite Gehäuse als erste Elektrode wirken kann. Auf diese Weise ist es möglich die coulometrische Titrationszelle besonders klein, kompakt und kostengünstig zu realisieren, da bei der Verwendung des ersten oder zweiten Gehäuses als erste Elektrode auf eine separate erste Elektrode verzichtet werden kann.

Geeignete elektrisch leitende Polymere für den Einsatz in der coulometrischen Titrationszelle sind insbesondere Polymere, welchen zur Erhöhung der elektrischen Leitfähigkeit ein oder mehrere Additive enthalten, wie beispielsweise Graphit, Metallpartikel, Metallverbindungen und/oder Kohlenstoff-Nanoröhren. Das Additiv wird dem Polymer vorzugweise in einer Zumischung von ca. 20 bis ca. 35 % beigesetzt.

Die Gasentwicklung innerhalb der coulometrischen Zelle kann zudem durch die Wahl eines geeigneten Redoxsystems stark reduziert oder sogar vollständig unterdrückt werden. Geeignete Redoxsysteme umfassen beispielweise

Iod / Iodid- Verbindungen ($I_2/I^-$), Eisen(III)cyanid / Eisen(II)cyanid Verbindungen $\left(Fe(CN)_6^{3-/4-}\right)$ oder Zink / Zink(II) Verbindungen ($Zn/Zn^{2+}$)

Ein Zink / Zink(II)-Redoxsystem kann in der erfindungsgemässen Titrationszelle als ersten Redoxpartner eine Zink-Komplexverbindung umfassen, wie beispielsweise $Zn[(NH_3)_2(H_2O)_2]^{2+}$ als Chlorid-, Nitrat- oder Sulfat-Verbindung. Als zweiten Redoxpartner kann zum Beispiel eine Zink-Opferelektrode als zweite Elektrode eingesetzt werden. In einer weiteren Ausgestaltung kann der zweite Redoxpartner in Form von Zinkpulver vorliegen, welches dem festen Elektrolyten zugesetzt ist. Zur Erhöhung der Leitfähigkeit kann dem Elektrolyten zudem als Additiv eine elektrisch leitende Verbindung, wie beispielsweise Graphit, zugesetzt werden.

Ein fester Elektrolyt kann beispielsweise eine wässrige Lösung des ersten oder beider Redoxpartner umfassen, welcher beispielsweise ca. 10% bis ca. 40% Silikagel zur Bindung des enthaltenen Wassers zugesetzt wurde. Neben Silikagel können auch Schicht- oder Gerüstsilikate, wie zum Beispiel Zeolithe, oder Zellulose-Verbindungen, wie beispielsweise Hydroxyethylencellulose, zur Wasser-Bindung eingesetzt werden.

Bei Verwendung eines $Zn/Zn^{2+}$-Redoxsystems entsteht während der Titration im Elektrolyten $Zn^{2+}$ welches mit einem geeigneten Komplexbildner oder Ionenaustauscher, gebunden werden kann. Der Komplexbildner wird ebenfalls dem Elektrolyten zugesetzt. Als Komplexbildner oder Ionenaustauscher können beispielsweise Zeolithe oder ähnlich wirkende Tonmineralien bzw. Silikate eingesetzt werden.

Wird ein $I_2/I_3^-$ oder $Fe(CN)_6^{3-/4-}$-Redoxsystem eingesetzt, so kann auf den Einsatz von weiteren Komplexbildnern oder Ionenaustauschern verzichtet werden, da in diesem Fall die Redoxpartner selbst Komplexbildner sind. Auch diese Redoxsysteme werden zusammen mit einem festen oder verfestigten Elektrolyten eingesetzt.

Anstelle von festen Elektrolyten können auch verfestigte Elektrolyte, wie beispielsweise Hydrogele eingesetzt werden, welche zumindest den ersten Redoxpartner enthalten. Ein Hydrogel-Elektrolyt für eine coulometrische Titrationszelle kann beispielsweise durch Überführung einer wässrigen $ZnX_2$-Lösung (mit $X = Cl$, $SO_4$) in ein Hydrogel erzeugt werden. Hierzu können sowohl lineare Polymerketten, wie beispielsweise Poly-N-Vinylformamid, oder auch quervernetzte Polymerketten, wie beispielsweise ein Copolymer aus Glycerin-Methacrylat und N,N'-Bis-Acrylamid, eingesetzt werden. Zur Gewährleistung eines ausreichend hohen Ionentransports im Hydrogel ist es wichtig, die Viskosität der verwendeten Hydrogele anzupassen bzw. einzustellen. Eine geeignete Viskosität kann durch Einsatz von ca. 10 Gew.-% bis ca. 30 Gew.-% Monomer erreicht werden.

Zusätzlich weisen Hydrogele einen produktionstechnischen Vorteil auf, da diese in flüssiger Form in das zweite Gehäuse eingebracht werden und dort direkt, also *in situ*, auspolymerisiert und so verfestigt werden können.

Das Diaphragma, welches zwischen der ersten und zweiten elektrochemischen Halbzelle angeordnet ist, ermöglicht je nach Ausgestaltung einen Ladungs- und Stofftransport zwischen der ersten und zweiten elektrochemischen Halbzelle, welcher bidirektional oder unidirektional nur von der zweiten zur ersten elektrochemischen Halbzelle stattfindet. Vorzugsweise besteht das Diaphragma im Wesentlichen aus einer porösen Keramik, einem porösen Glas und/oder einer ionenselektiven Membran.

Das Diaphragma kann als Anionen-Austausch-Membran oder Kationen-Austausch-Membran ausgestaltet sein, wobei die Art des Diaphragmas vom Einsatz der Titrationszelle als Säure- oder Basengenerator sowie auch vom eingesetzten Redoxsystem abhängt.

Ferner kann der Probe ein Inertsalz zugesetzt werden, welches die Probe nicht verändert und somit chemisch inert gegenüber der Probe ist. Beispiele für solche Inertsalze sind beispielsweise Kaliumsulfat ($K_2SO_4$) oder Kaliumnitrat ($KNO_3$). Durch Zugabe eines Inertsalzes kann die Leitfähigkeit der Probe, welches meist als Fluid, zum Beispiel einer Lösung oder Suspension vorliegt, erhöht werden. Die Erhöhung der Leitfähigkeit der Probe ermöglicht die Durchführung der coulometrischen Titration mit einer geringeren zwischen der ersten und zweiten Elektrode angelegten Spannung, da die durch die Zugabe des Inertsalzes erhöhte Ionenbeweglichkeit den Ladungsausgleich zwischen der Probe und der coulometrischen Titrationszelle verbessert.

Weiterhin kann die zweite elektrochemische Halbzelle der coulometrischen Titrationszelle eine chemische oder physikalische Diffusionsfalle aufweisen, welche dazu dient einen Stofftransport von der zweiten elektrochemischen Halbzelle in die Probe oder das Messmedium zu verhindern. Der Einsatz von Diffusions- oder Ionenfallen zur Aufrechterhaltung der Funktionsfähigkeit von coulometrischen Titrationszellen ist prinzipiell bekannt.

Verschiedene Ausführungsbeispiele einer erfindungsgemässen coulometrischen Titrationszelle werden anhand der folgenden Figuren näher beschrieben, wobei gleiche Elemente mit gleichen oder ähnlichen Bezugszeichen versehen sind. Die Figuren zeigen:

Fig.1    Schematische Darstellung einer coulometrischen Titrationszelle, bei welcher ein zweites Gehäuse austauschbar in einem ersten Gehäuse angeordnet ist;

Fig.2    Schematische Darstellung einer weiteren coulometrischen Titrationszelle, bei welcher das ersten Gehäuse als erste Elektrode ausgebildet ist;

Fig. 3    Schematische Darstellung einer Messanordnung mit einer coulometrischen Titrationszelle gemäss Figur 2 und einem Sensor;

Fig. 4    Schematische Darstellung einer weiteren Messanordnung mit einer erfindungsgemässen coulometrischen Titrationszelle und einem Sensor;

Fig. 5    Schematische Darstellung einer Durchfluss-Messanordnung mit einer erfindungsgemässen coulometrischen Titrationszelle und einem Sensor;

Fig. 6    Schnitt durch eine weitere coulometrische Titrationszelle mit stirnseitig angeordnetem Diaphragma;

Fig. 7    Teildarstellung der coulometrischen Titrationszelle aus Fig. 6 im Schnitt;

Fig. 8    Schnitt durch eine weitere coulometrische Titrationszelle mit stirnseitig angeordnetem Diaphragma und einem als erste Elektrode ausgebildetem zweitem Gehäuse;

Fig. 9    Teildarstellung einer weiteren coulometrischen Titrationszelle mit zwei seitlich angeordneten Diaphragmen und einem austauschbarem zweiten Gehäuse.

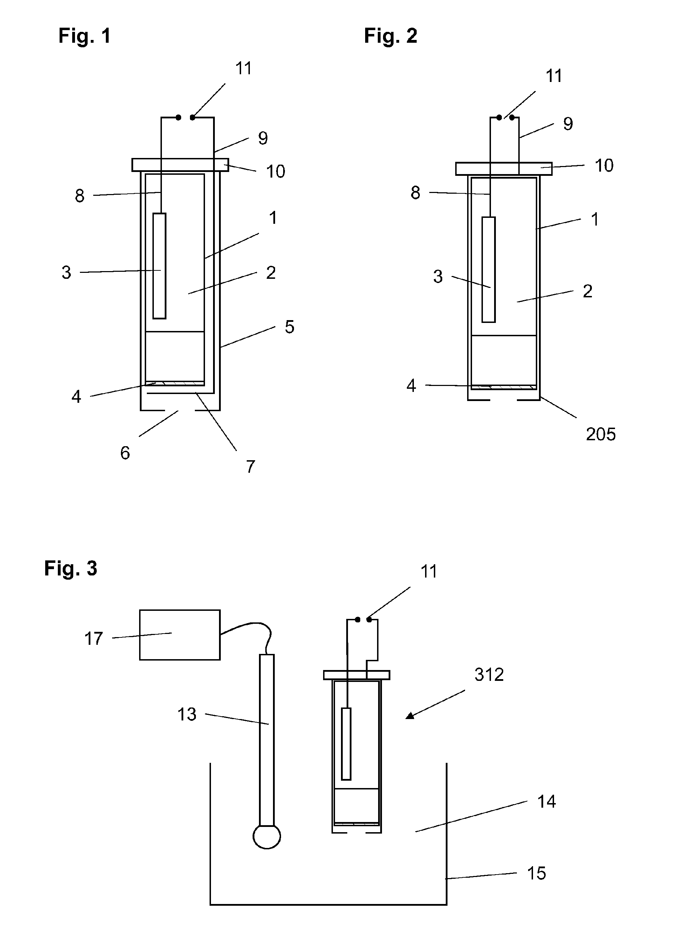

Figur 1 zeigt eine schematische Darstellung einer erfindungsgemässen coulometrischen Titrationszelle mit einem zweiten Gehäuse 1, welches mit einem festen oder verfestigten Elektrolyten 2 gefüllt ist, in welchen eine zweite Elektrode 3 eintaucht. Das zweite Gehäuse 1 ist geschlossen ausgestaltet. Ein Ladungs- und/oder Stofftransport ist nur durch ein Diaphragma 4 möglich, welches so im ersten Gehäuse angeordnet ist, dass es im Betrieb in Kontakt mit einer zu titrierenden Probe steht. Eine elektrische Verbindung 8 der zweiten Elektrode 3 ist aus dem zweiten Gehäuse 1 herausgeführt.

Weiterhin umfasst die in Figur 1 gezeigte Titrationszelle ein erstes Gehäuse 5, welches eine Öffnung 6 zur Kontaktierung der Probe aufweist. Im ersten Gehäuse 5 sind eine erste Elektrode 7 sowie das zweite Gehäuse 1 angeordnet. Das erste Gehäuse 5 ist mit einem Deckel 10 derart verschlossen, dass ein Austausch des zweiten Gehäuses 1 und der darin enthaltenen Bauteile möglich ist. Durch den Deckel 10 sind in diesem Ausführungsbeispiel zudem elektrische Kontakte 8, 9 geführt, über welche die erste und zweite Elektrode 3, 7 in einen geregelten Stromkreis 11 eingebunden sind, wie es hier stark vereinfacht angedeutet ist.

Figur 2 zeigt eine weitere Ausführungsform einer erfindungsgemässen coulometrischen Titrationszelle, welche im Wesentlichen identisch mit der in Figur 1 beschriebenen Titrationszelle ist. Jedoch ist in dieser Ausführungsform im ersten Gehäuse 205 keine separate erste Elektrode angeordnet, sondern das erste Gehäuse 205 selbst stellt die erste Elektrode dar. Damit das erste Gehäuse 205 als erste Elektrode wirken kann, besteht es zumindest teilweise aus einem elektrisch leitenden Polymer und ist über eine elektrische Verbindung 9 in den Stromkreis 11 eingebunden.

Figur 3 zeigt eine schematische Darstellung einer Messanordnung mit einer coulometrischen Titrationszelle 312 und einem Sensor 13. Die dargestellte coulometrische Titrationszelle 312 entspricht hier der in Figur 2 gezeigten Ausführungsform, wobei auch die Ausführung gemäss Figur 1 verwendet werden kann. Sowohl der Sensor 13 als auch die Titrationszelle 312 tauchen in eine Probe 14 ein, an der eine titrimetrische Bestimmung durchgeführt werden soll. Die Probe oder das Messmedium 14 ist während der Titration in einem geeigneten Behältnis 15 angeordnet. Die Probe 14 ist in der Regel ein Fluid, beispielsweise eine Lösung oder eine Suspension. Um die Leitfähigkeit der Probe 14 zu erhöhen kann diesem ein Inertsalz zugesetzt werden. Die Erhöhung der Leitfähigkeit der Probe 14 ermöglicht die Durchführung der coulometrischen Titration mit einer geringeren Spannung, welche zwischen der ersten und zweiten Elektrode angelegt wird, da die durch die Zugabe des Inertsalzes erhöhte Ionenbeweglichkeit den Ladungsausgleich zwischen der Probe und der coulometrischen Titrationszelle verbessert. Als Sensor 13 kann beispielsweise ein ionenselektiver, potentiometrischer oder Leitfähigkeitssensor eingesetzt werden. Mit dem Sensor 13 wird der entsprechende Parameter der Probe 14 während der Titration bis zum Erreichen des End- oder Äquivalenzpunktes erfasst, wie es hier durch eine Anzeigeeinheit 17 angedeutet ist.

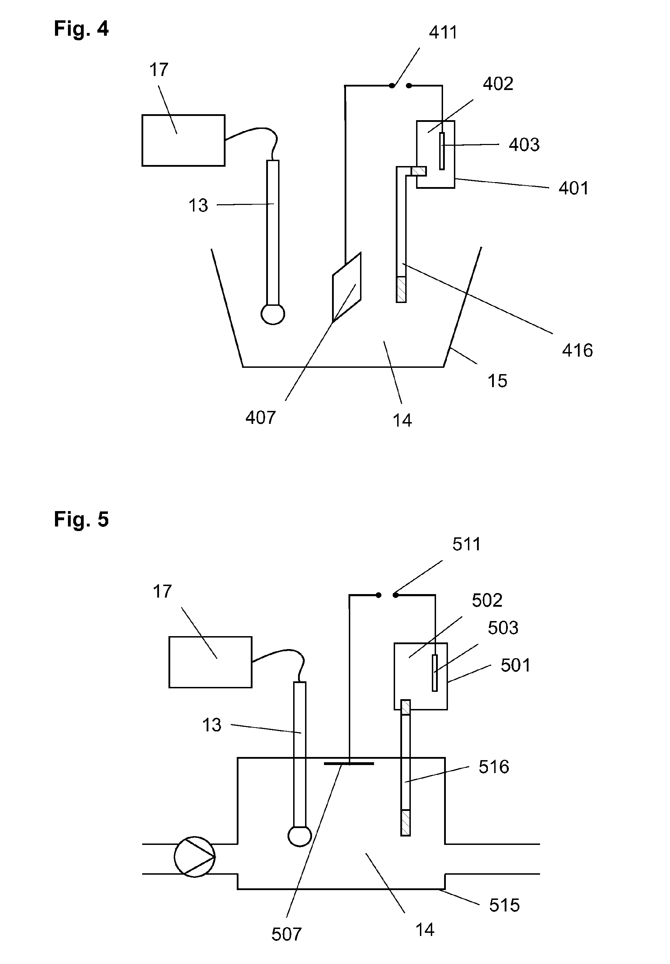

Figur 4 zeigt schematisch eine weitere Messanordnung mit einem Sensor 13 und einer coulometrischen Titrationszelle in einer weiteren Ausführungsform. Diese Titrationszelle umfasst ein zweites Gehäuse 401, in welchem eine zweite Elektrode 403 angeordnet ist. Die zweite Elektrode 403 ist in einen Stromkreis 411 eingebunden und das zweite Gehäuse 401 weist eine Überführung 416 auf, welche ein Diaphragma enthält oder als Diaphragma ausgebildet ist. Die Überführung 416 ist im Betrieb in Kontakt mit einer Probe 14, welche sich in einem Behältnis 15 befindet. Weiterhin taucht im Betrieb eine erste Elektrode 407, welche ebenfalls in den Stromkreis 411 eingebunden ist, und ein Sensor 13, welcher mit einer geeigneten Anzeigeeinheit 17 verbunden ist, in die Probe 14 ein. Die Überführung 416 stellt im Betrieb einen Kontakt zwischen der zweiten elektrochemischen Halbzelle mit der zweiten Elektrode 403 und der ersten elektrochemischen Halbzelle mit der ersten Elektrode 407 her, so dass ein Ladungs- und Stofftransport zwischen den beiden elektrochemischen Halbzelle stattfinden kann.

Figur 5 zeigt schematisch eine Durchfluss-Messanordnung mit einem Sensor 13 und einer coulometrischen Titrationszelle. Eine Probe 14 fliesst durch eine Durchflusszelle 515, in welcher der Sensor 13 und eine erste Elektrode 507 angeordnet sind. Der Sensor 13 ist wiederum mit einer Anzeigeeinheit 17 verbunden. Die erste Elektrode 507 und eine zweite Elektrode 503 sind in einen Stromkreis 511 eingebunden. Die zweite Elektrode 503 ist in einem geschlossenen Gehäuse 501 angeordnet und taucht in einen darin befindlichen Elektrolyten 502 ein. Die zweite elektrochemische Halbzelle mit der zweiten Elektrode 503 ist über eine Überführung 516, welche wie bereits im Zusammenhang mit Figur 4 beschrieben ein Diaphragma umfasst, mit der ersten elektrochemischen Halbzelle verbunden. Die Überführung 516 ist derart ausgestaltet, dass im Betrieb der coulometrischen Titrationszelle zwischen der zweiten und ersten elektrochemischen Halbzelle sowohl ein Ladungs- als auch ein Stofftransport ermöglicht sind.

Durch die räumliche Trennung der ersten und zweiten elektrochemischen Halbzelle, wie es zum Beispiel in den Figuren 4 und 5 gezeigt ist, wird die Realisation einer besonders kleinen und kompakten coulometrischen Titrationszelle ermöglicht.

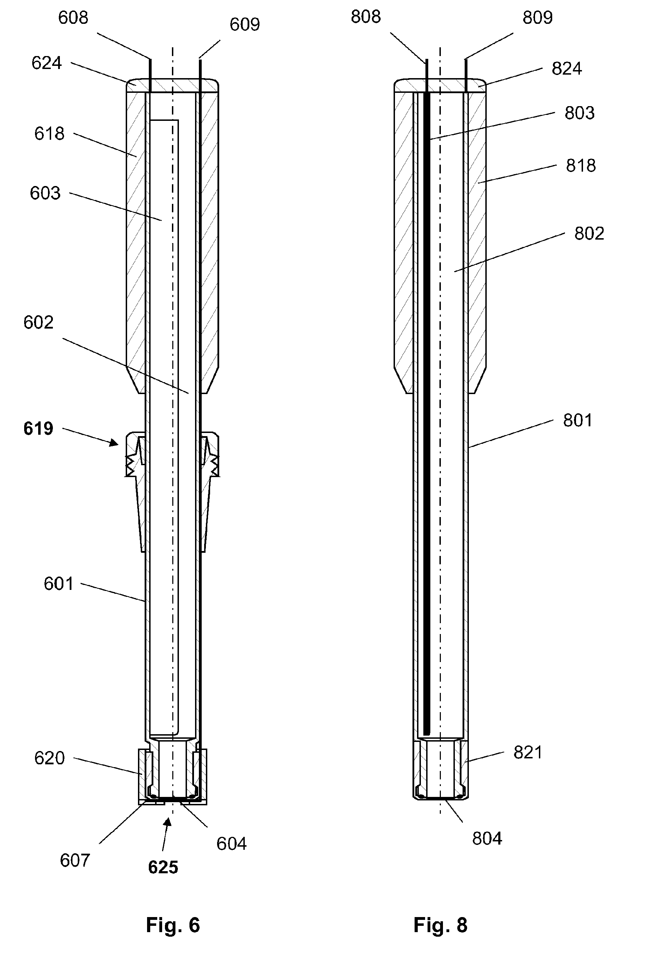

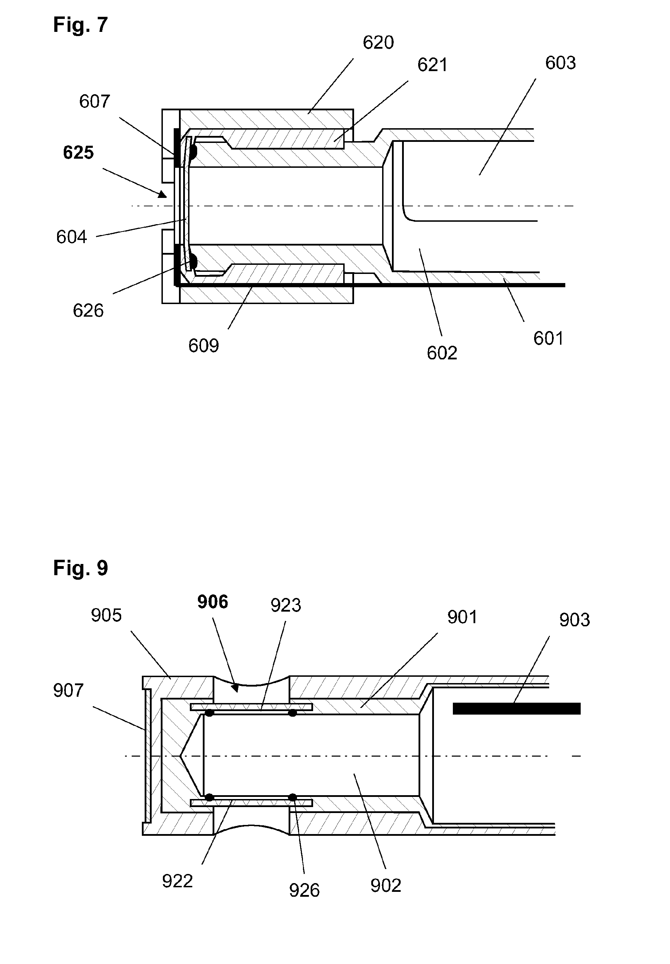

Figuren 6 bis 8 zeigen zwei weitere Ausführungsformen einer erfindungsgemässen coulometrischen Titrationszelle im Schnitt, wobei Figur 7 eine Teildarstellung von Figur 6 ist.

Die in Figur 6 und 7 gezeigte coulometrische Titrationszelle umfasst ein längliches rohrförmiges zweites Gehäuse 601, welches mit einem festen oder verfestigten Elektrolyten 602 gefüllt ist. In den Elektrolyten 602 taucht eine zweite Elektrode 603 ein. Die zweite Elektrode 603 ist in diesem Ausführungsbeispiel eine dünnes Blech oder eine dünne Platte aus einem geeigneten Elektrodenmaterial, welche an der Innenwand des Gehäuses 601 angeordnet ist.

Das im Betrieb von der Probe oder dem Messmedium abgewandte Ende des Gehäuses 601 ist mit einem Deckel 624 verschlossen, welcher zudem das Abschlusselement eines Griffelements 618 ist. Der Deckel 624 kann beispielsweise zum Nachfüllen oder Austauschen des Elektrolyten 602 abgenommen werden. Vorzugsweise ist der Deckel 602 lösbar mit dem Griffelement 618 und dem zweiten Gehäuse 601 verbunden.

Stirnseitig, auf dem im Betrieb in ein Messmedium oder eine Probe eintauchenden Ende wird das zweite Gehäuse 601 durch ein Diaphragma 604 abgeschlossen, welches durch ein Halteelement 621 am zweiten Gehäuse 601 fixiert ist. Damit die Probe nicht in das zweite Gehäuse 601 eindringen kann, ist zwischen dem Diaphragma 607 und dem zweiten Gehäuse 601 ein Dichtmittel 626 angeordnet, hier ein O-Ring. Auf Seiten der Probe ist vor dem Diaphragma 604 eine erste Elektrode 607 angeordnet, welche in diesem Ausführungsbeispiel ringförmig ausgebildet ist, so dass die Probe im Betrieb über die Aussparung in der ringförmigen ersten Elektrode 607 in Kontakt mit dem Diaphragma 604 treten kann.

Das stirnseitige Ende des zweiten Gehäuses 601 ist von einem ersten Gehäuse 620 unter Auslassung einer Öffnung 625 umschlossen. Die Öffnung 625 gewährleistet im Betrieb den Kontakt zwischen dem Diaphragma 604 und der Probe, in welches die coulometrische Titrationszelle stirnseitig eintaucht. Im ersten Gehäuse 620 ist zudem die erste Elektrode 607 angeordnet.

Sowohl die erste als auch die zweite Elektrode 603, 607 sind über elektrische Verbindungen 608, 609, welche durch den Deckel 624 geführt sind, in einen Stromkreis eingebunden (s. Figuren 1 bis 5).

Weiterhin ist in Figur 6 ein Adapter 619 gezeigt, welcher dazu dient die coulometrische Titrationszelle beispielsweise in einen Halter eines Titrators einzusetzen.

Figur 8 zeigt ein weiteres Ausführungsbeispiel einer coulometrischen Titrationszelle mit stirnseitigem Diaphragma 804, welches ein längliches rohrförmiges zweites Gehäuse 801 abschliesst. Zwischen dem Diaphragma 804 und dem zweiten Gehäuse 801 ist wie bereits in den Figuren 6 und 7 gezeigt ein Dichtmittel angeordnet. Das Diaphragma 804 wird mit einem Halteelement 821 am zweiten Gehäuse 801 gehalten oder fixiert.

Das zweite Gehäuse 801 ist mit einem festen oder verfestigtem Elektrolyten 802 gefüllt, in den eine hier stabförmige zweite Elektrode 803 eintaucht. Das im Betrieb von der Probe abgewandte Ende des zweiten Gehäuses 801 ist teilweise von einem Griffelement 818 umschlossen und mit einem Deckel 824 lösbar verschlossen, wie es bereits im Zusammenhang mit den Figuren 6 und 7 beschrieben wurde. Durch den Deckel 724 sind elektrische Verbindungen 808, 809 zum Anschluss der zweiten Elektrode 803 und einer ersten Elektrode geführt. Die erste Elektrode wird in diesem Ausführungsbeispiel vom zweiten Gehäuse 801 gebildet, welches ein elektrische leitendes Polymer oder eine elektrisch leitenden Schicht umfasst. Das zweite Gehäuse 801 ist mit der elektrischen Verbindung 809 verbunden.

Figur 9 zeigt eine Teildarstellung einer weiteren coulometrischen Titrationszelle mit mindestens zwei seitlich angeordneten Diaphragmen 922, 923 im Schnitt.

Die coulometrische Titrationszelle umfasst wiederum ein längliches und im Wesentlichen rohrförmiges zweites Gehäuse 901, welches austauschbar in einem ersten Gehäuse 905 angeordnet ist. Das zweite Gehäuse 901 ist mit einem festen oder verfestigten Elektrolyten 902 gefüllt und wird durch mindestens zwei seitlich angeordneten Diaphragmen 922, 923 im Betrieb gegen eine Probe abgeschlossen. Die Diaphragmen 922, 923 sind durch zwei Dichtmittel 926 abgedichtet, so dass die Probe im Betrieb nur durch die Diaphragmen 922, 923 mit der zweiten elektrochemischen Halbzelle in Kontakt steht. In den Elektrolyten 902 taucht ferner eine stabförmige zweite Elektrode 903 ein, wie sie bereits im Zusammenhang mit Figur 8 beschrieben wurde.

Stirnseitig am dem Messmedium zugewandten Ende des ersten Gehäuses 905 ist eine erste Elektrode 907 angebracht, welche hier als flache Scheibe in das erste Gehäuse 905 eingelassen ist. Ferner weisst das erste Gehäuse 905 mindesten zwei seitliche Öffnungen 906 auf, die so angeordnet sind, dass im Betrieb die Diaphragmen 922, 923 in Kontakt mit einer Probe stehen können.

Die erste und zweite Elektrode 903, 907 sind wiederum über geeignete elektrische Verbindungen in einen Stromkreis eingebunden, welcher in dieser Teildarstellung nicht gezeigt ist.

Obwohl die Erfindung durch die Darstellung spezifischer Ausführungsbeispiele beschrieben worden ist, ist es offensichtlich, dass zahlreiche weitere Ausführungsvarianten in Kenntnis der vorliegenden Erfindung geschaffen werden können, beispielsweise indem die Merkmale der einzelnen Ausführungsbeispiele miteinander kombiniert und/oder einzelne Funktionseinheiten der Ausführungsbeispiele ausgetauscht werden. Insbesondere können die in den Figuren 6 bis 9 gezeigten Ausführungsbeispiele mit oder ohne austauschbares zweites Gehäuse ausgestaltet werden, zudem kann die erste Elektrode als Stab, Blech oder Platte ausgestaltet sein. Ebenso können die coulometrischen Titrationszellen gemäss Figuren 6 bis 8 mit oder ohne Adapter ausgebildet sein. Der Adapter kann dabei in verschiedene Formen ausgestaltet sein, welche für den Einsatz in einem gewünschten Titrationsautomaten oder an einem geeigneten Ständer geeignet sind.

**Liste der Bezugszeichen**

| | |
|---|---|
| 1, 401, 501, 601, 801, 901 | Zweites Gehäuse |
| 2, 302, 402, 502, 602, 802, 902 | Elektrolyt |
| 3, 403, 503, 603, 803, 903 | Zweite Elektrode |
| 4,604, 804 | Diaphragma |
| 5, 205, 905 | Erstes Gehäuse |
| 6, 906 | Öffnung |
| 7, 407, 507, 607, 907 | Erste Elektrode |
| 8, 608, 808 | Elektrische Verbindung |
| 9, 609, 809 | Elektrische Verbindung |
| 10 | Deckel |
| 11, 411, 511 | Stromkreis |
| 312 | Titrationszelle |
| 13 | Sensor |
| 14 | Probe |
| 515 | Behältnis |
| 416, 516 | Überführung |
| 17 | Anzeigeeinheit |
| 618,718 | Griffelement |
| 619 | Adapter |
| 620 | Erstes Gehäuse |
| 621,721 | Halteelement |
| 922 | Diaphragma |
| 923 | Diaphragma |
| 624, 724 | Deckel |
| 625 | Öffnung |
| 626, 926 | Dichtmittel |

**Patentansprüche**

1. Coulometrische Titrationszelle mit einer ersten elektrochemische Halbzelle mit einer ersten Elektrode (205, 801, 7, 407, 507, 607, 907); einem zweiten Gehäuse (1, 401, 501, 601, 801, 901), welches eine zweite elektrochemische Halbzelle mit einer zweiten Elektrode (3, 403, 503, 603, 803, 903) und einem Elektrolyten (2, 302, 402, 502, 602, 802, 902), in den die zweite Elektrode (3, 403, 503, 603, 803, 903) eintaucht, umfasst; einem Redoxsystem mit mindestens einem ersten und zweiten Redoxpartner; mindestens einem Diaphragma (4, 604, 804), welches zwischen der ersten und zweite elektrochemischen Halbzelle angeordnet ist; und einem Stromkreis (11, 411, 511), in welchen die erste und zweite elektrochemische Halbzelle eingebunden sind; **dadurch gekennzeichnet, dass** das zweite Gehäuse (1, 401, 501, 601, 801, 901) geschlossen ist, so dass ein Ladungs- und Stoffaustausch nur über das Diaphragma (4, 604, 804) möglich ist; und dass der Elektrolyt (2, 302, 402, 502, 602, 802, 902) fest oder verfestigt ist und einen ersten Redoxpartner enthält.

2. Titrationszelle nach Anspruch 1, wobei diese ein erstes Gehäuse (5, 205, 905) umfasst, in dem das zweite Gehäuse (1, 901) austauschbar angeordnet ist.

3. Titrationszelle nach Anspruch 1 oder 2, wobei der zweite Redoxpartner im Elektrolyten (2, 302, 402, 502, 602, 802, 902) oder in der zweiten Elektrode (3, 403, 503, 603, 803, 903) enthalten ist.

4. Titrationszelle nach einem der Ansprüche 1 bis 3, wobei das Redoxsystem ein reversibles Redoxsystem ist und die zweite Elektrode (3, 403, 503, 603, 803, 903) als Anode oder Kathode wirkt.

5. Titrationszelle nach einem der Ansprüche 1 bis 4, **dadurch gekennzeichnet, dass** die erste Elektrode (7, 407, 507, 607, 907) eines der folgenden Metalle, eine Metallverbindung und/oder eine Mischung daraus umfasst: rostfreier Stahl, Chrom, Molybdän, Nickel und/oder Titan.

**6.** Titrationszelle nach einem der Ansprüche 1 bis 5, **dadurch gekennzeichnet, dass** die zweite Elektrode (3, 403, 503, 603, 803, 903) eines der folgenden Metalle, eine Metallverbindung und/oder eine Mischung daraus umfasst: rostfreier Stahl, Chrom, Molybdän, Nickel, Titan und/oder Zink.

**7.** Titrationszelle nach einem der Ansprüche 1 bis 6, **dadurch gekennzeichnet, dass** die erste Elektrode (7, 407, 507, 607, 801, 907) und/oder zweite Elektrode (3, 403, 503, 603, 803, 903) ganz oder teilweise aus einem Glaskarbonwerkstoff oder einem elektrisch leitenden Polymer besteht.

**8.** Titrationszelle nach einem der Ansprüche 2 bis 7, wobei das erste Gehäuse (205) oder das zweite Gehäuse (801) ein elektrisch leitendes Polymer umfasst und als erste Elektrode wirkt.

**9.** Titrationszelle nach Anspruch 8, **dadurch gekennzeichnet, dass** das elektrisch leitende Polymer Carbon-Nanotubes umfasst.

**10.** Titrationszelle nach einem der Ansprüche 1 bis 9, **dadurch gekennzeichnet, dass** das Diaphragma (4, 604, 804) eine poröse Keramik, ein poröses Glas und/oder eine ionenselektive Membran umfasst.

**11.** Titrationszelle nach einem der Ansprüche 1 bis 10, **dadurch gekennzeichnet, dass** das Diaphragma (4, 604, 804) eine Anionen-Austausch-Membran oder eine Kationen-Austausch-Membran ist.

**Fig. 1**

**Fig. 2**

**Fig. 3**

**Fig. 4**

**Fig. 5**

**Fig. 6**

**Fig. 8**

**Fig. 7**

**Fig. 9**

Europäisches
Patentamt

European
Patent Office

Office européen
des brevets

## EUROPÄISCHER RECHERCHENBERICHT

Nummer der Anmeldung

EP 13 18 0899

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 0 740 312 A2 (AGENCY IND SCIENCE TECHN [JP]) 30. Oktober 1996 (1996-10-30) | 1-3 | INV. $G01N27/44$ |
| Y | * Zusammenfassung; Abbildungen 1, 2 * <br> * Spalte 1, Zeilen 17-44 * <br> * Spalte 2, Zeilen 48-56 * <br> ----- | 5,6 | $G01N31/16$ <br><br> ADD. <br> $G01N27/42$ |
| Y | US 5 273 631 A (NIPPON FILCON CO LTD [JP]) 28. Dezember 1993 (1993-12-28) <br> * Zusammenfassung; Anspruch 1; Abbildung 6 * <br><br> ----- | 5,6 | |
| Y,D | WO 2009/076144 A1 (DIONEX CORP [US]) 18. Juni 2009 (2009-06-18) <br> * Zusammenfassung; Abbildungen 1, 3 * <br> * Absätze [0021] - [0023], [0028] - [0036] * <br><br> ----- | 1-4,7-11 | |
| Y | US 2001/032785 A1 (CHA GEUN SIG [KR] ET AL) 25. Oktober 2001 (2001-10-25) <br> * Zusammenfassung; Anspruch 5 * <br> * Absätze [0002] - [0004], [0193] * <br> ----- | 1-4,7-11 | |

RECHERCHIERTE SACHGEBIETE (IPC)

$G01N$

Der vorliegende Recherchenbericht wurde für alle Patentansprüche erstellt

| Recherchenort | Abschlußdatum der Recherche | Prüfer |
|---|---|---|
| München | 11. Dezember 2013 | Hanisch, Christian |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes
    Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 13 18 0899

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

11-12-2013

| Im Recherchenbericht angeführtes Patentdokument | | Datum der Veröffentlichung | Mitglied(er) der Patentfamilie | | Datum der Veröffentlichung |
|---|---|---|---|---|---|
| EP 0740312 | A2 | 30-10-1996 | EP 0740312 A2 | | 30-10-1996 |
| | | | JP 2671948 B2 | | 05-11-1997 |
| | | | JP H08306513 A | | 22-11-1996 |
| US 5273631 | A | 28-12-1993 | JP H0526846 A | | 02-02-1993 |
| | | | US 5273631 A | | 28-12-1993 |
| WO 2009076144 | A1 | 18-06-2009 | EP 2217915 A1 | | 18-08-2010 |
| | | | JP 2011506930 A | | 03-03-2011 |
| | | | US 2009145777 A1 | | 11-06-2009 |
| | | | WO 2009076144 A1 | | 18-06-2009 |
| US 2001032785 | A1 | 25-10-2001 | KR 20010092830 A | | 27-10-2001 |
| | | | US 2001032785 A1 | | 25-10-2001 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

**In der Beschreibung aufgeführte Patentdokumente**

- WO 2009076144 A1